# EUROPÄISCHE PATENTSCHRIFT

(11) **EP 3 377 462 B1**
(45) Veröffentlichungstag und Bekanntmachung des Hinweises auf die Patenterteilung: **12.08.2020**
(21) Anmeldenummer: 16791618.8
(22) Anmeldetag: 08.11.2016
(51) Int. Cl.: C06B 23/00, C06B 33/00, C06C 5/06, C06C 9/00

(54) **REACH-KONFORMER PYROTECHNISCHER VERZÖGERUNGS- UND ANZÜNDSATZ MIT VARIABEL EINSTELLBAREN LEISTUNGSPARAMETERN**
REACH-COMPLIANT PYROTECHNIC DELAYED-ACTION COMPOSITION AND PRIMER CHARGE HAVING VARIABLY SETTABLE PERFORMANCE PARAMETERS
COMPOSITION PYROTECHNIQUE DE RETARDEMENT ET D'ALLUMAGE CONFORME AU RÈGLEMENT REACH ET DONT LES PARAMÈTRES DE PERFORMANCE PEUVENT ÊTRE MODULABLES

(30) Priorität: 18.11.2015 DE 102015014821
(43) Veröffentlichungstag der Anmeldung: 26.09.2018
(73) Patentinhaber: Rheinmetall Waffe Munition GmbH, 29345 Unterlüss (DE)
(72) Erfinder: CEGIEL, Dirk, 23847 Stubben (DE); SCHULZ, Ernest, 22455 Hamburg (DE); STRENGER, Julia, 20535 Hamburg (DE)
(74) Vertreter: Dietrich, Barbara
(86) Internationale Anmeldenummer: PCT/EP2016/077014
(87) Internationale Veröffentlichungsnummer: WO 2017/084916

(56) Entgegenhaltungen:
- EP-A1- 0 332 986
- EP-A1- 0 599 792
- EP-A1- 1 000 916
- WO-A1-92/01655
- DE-B- 1 006 770
- GB-A- 2 168 279
- US-A- 2 640 770
- US-A- 3 480 489
- US-A- 3 713 852
- US-A- 3 897 731
- US-A- 4 484 960
- US-A- 5 872 329
- US-A1- 2003 145 924
- US-A1- 2004 048 058
- US-B1- 8 092 623
- US-B2- 7 721 652

## Beschreibung

Die Erfindung betrifft einen pyrotechnischen Satz, nämlich einen pyrotechnischen Verzögerungssatz und pyrotechnischen Anzündsatz, im Folgenden Anzündsatz bzw. Verzögerungssatz genannt, aus human- und ökotoxikologisch unbedenklichen, REACh (Registration, Evaluation, Authorisation and Restriction of Chemicals) konformen Inhaltsstoffen.

Verzögerungssätze werden üblicherweise in pyrotechnischen Verzögerungseinheiten verwendet. Hierbei werden die Verzögerungssätze entweder direkt in die Gegenstände / Munition oder in spezielle Metallröhrchen verpresst, welche dann als eigenständige pyrotechnische Baugruppe in eine Vielzahl unterschiedlicher pyrotechnischer Gegenstände / Munitionsarten verbaut werden.

Es ist eine Reihe von Verzögerungssätzen bekannt, die für diese Zwecke verwendet werden. Nachteile dieser Sätze sind u.a., dass sie human- und ökotoxikologische Substanzen wie Blei-, Chrom-, Nickel-, Bariumverbindungen oder Perchlorate enthalten.

Es ist bekannt, beispielsweise aus der US 7,883,593 B1, dass sich Mischungen aus Eisenoxiden und Metallpulvern anzünden lassen und beim Brennen flüssiges Eisen produzieren (sogenannte Thermite). Eine Mischung, bestehend aus pulverförmigem Eisenoxid und Zirconium, lässt sich, z.B. in Röhrchen verdichtet, leicht anzünden, brennt mit spezifischer Geschwindigkeit und produziert eine glühende Masse, die überwiegend flüssiges Eisen enthält.

Nachteile dieser Thermitmischung sind u.a., dass sie bedingt durch die stark exotherme Reaktion und den explosionsartigen Abbrand, sehr dünnflüssige Schlacke produziert, die leicht fortgeschleudert wird bevor sie zu festen Partikeln erstarrt. Außerdem lässt sich die Brennzeit durch Verändern der stöchiometrischen Zusammensetzung nur sehr begrenzt steuern.

Die CA 2 061 409 beschreibt hierzu einen Verzögerungssatz bestehend aus Eisenoxiden und Silicium, wobei es mit dieser Mischung nur sehr begrenzt möglich ist, verschiedene Verzögerungszeiten zu realisieren.

Weiterhin zeigt die EP 0 847 972 A1 einen Verzögerungssatz, welcher durch verschiedene Zusammensetzungen unterschiedliche Verzögerungszeiten aufweisen kann.

Weitere pyrotechnische Sätze sind aus US 4484960, US 8092623, US 3480489 und US 2003/0145924 bekannt. Menge und Eigenschaften der gebildeten Schlacke brennender Verzögerungssätze, sind für die zuverlässige Funktion von Bedeutung. Das gilt insbesondere für verschießbare Munition, da hier die Brennfront der verbauten Verzögerungselemente bei bestimmten Munitionsarten konstruktionsbedingt offen liegt. Die Brennfront ist somit den auftretenden Belastungen beim Abschuss und im Flug der Geschosse unmittelbar ausgesetzt.

Produziert der offen brennende Verzögerungssatz in einem Verzögerungselement zu wenig Schlacke, oder ist diese zu dünnflüssig und erstarrt nicht schnell genug, können die Belastungen beim Verschießen der Munition dazu führen, dass die Schlacke von der Brennfront abgerissen wird und der verdichtete Verzögerungssatz nicht mehr weiter brennt. Es kommt zu sogenannten Munitionsversagern, weiche nicht nur auf verschießbare Munition begrenzt sind. In Abhängigkeit von der Satzzusammensetzung und der Anzündart kann es erforderlich sein, auf den in der Verzögerungseinheit verpressten Verzögerungssatz zusätzlich einen Anzündsatz zu pressen. Das ist insbesondere dann der Fall, wenn der Verzögerungssatz langsam brennt und der Energieeintrag durch die primäre Anzündung gering ist.

Aufgabe der vorliegenden Erfindung ist somit, einen Verzögerungssatz bereitzustellen, welcher die oben genannten Nachteile nicht aufweist. Er ist in seinen Leistungsparametern, insbesondere in der Brennzeit, in einem weiten Bereich variabel einstellbar. Er ist selbstverschlackend, wodurch ein Abreißen der Brennfront auch unter dynamischen Bedingungen verhindert wird. Die Inhaltsstoffe sind human- und ökotoxikologisch unbedenklich und REACh konform. Der Verzögerungssatz eignet sich zur Verwendung in pyrotechnischen Verzögerungseinheiten, welche sich durch einen gasarmen Abbrand auszeichnen. Die Brennzeit lässt sich durch Variieren des Mischungsverhältnisses der Satzbestandteile zwischen 0,2 s/cm bis zu 4,0 s/cm in verpresster Form einstellen.

Der Verzögerungssatz besteht aus mindestens einem Oxidations- und mindestens einem Reduktionsmittel, speziellen schlackebildenden und gerüstbildenden Zuschlagstoffen, sowie einem mineralischen Binder.

Bei dem Oxidationsmittel handelt es sich primär um Eisenoxide mit unterschiedlichen Oxidationsstufen des Eisens. Als Reduktionsmittel wird primär Zirconium und Zirconiumhydrid eingesetzt. Zusätzlich können Ferrosilicium, Ferrozirconium und Bor als sekundäre Reduktionsmittel enthalten sein. Als schlackebildende Zuschlagstoffe werden Eisenlegierungen und Wolfram eingesetzt. Als gerüstbildende Zuschlagstoffe kommen Alumosilicate und Silicatgläser zum Einsatz, welche zusammen mit amorphen Polykieselsäuren die Satzbestandteile binden.

In Abhängigkeit, der in Art und Masse definierten Satzbestandteile, sind die Brennzeit und die Verschlackungseigenschaften in einem weiten Bereich steuerbar.

So kann das Volumen der gebildeten Schlacke aus den Produkten der primären Reaktion von Eisenoxiden und Zirconium / Zirconiumhydrid durch Zugabe von Eisenlegierungen, wie z.B. Ferrosilicium, Ferrowolfram, Ferrozirconium oder Wolfram gesteigert werden. Erfindungsgemäß ist vorgesehen, dass diese Eisenlegierungen oder das Wolfram gegenüber den Eisenoxiden überwiegend nicht als Reduktionsmittel reagieren, sondern vorzugsweise in der Reaktionszone des brennenden Satzes zusammen mit dem aus der primären Reaktion gebildeten Eisen verschmelzen, zu einer harten Masse erstarren und so das Volumen des abgebrannten Verzögerungssatzes auffüllen.

Bei langsam brennenden Verzögerungssätzen, insbesondere beim Abbrand in Kälte, ist es auch bedeutsam, dass die freigesetzte Wärmeenergie nicht zu schnell von der Brennfront abgeführt wird. Dieses wird dadurch erreicht, dass die geschmolzene Schlacke im System gehalten wird und die Reaktionszone vollständig ausfüllt. Diese Eigenschaft ist eine Voraussetzung dafür, dass auch langsam brennende Verzögerungssätze bei extremer Kälte und dynamischer Belastung, z.B. beim Abschuss, in den Verzögerungseinheiten weiter brennen.

Damit die geschmolzene Schlacke möglichst schnell erstarrt, hat es sich als vorteilhaft erweisen, wenn ein Teil der definierten Eisenlegierungen Metalle enthalten, die einen höheren Schmelzpunkt als Eisen aufweisen (z.B. Wolfram und Zirconium).

Erfindungsgemäß ist auch vorgesehen, dass die mit dem Eisen legierten Metalle teilweise als sekundäres Reduktionsmittel mit dem Eisenoxid reagieren. Beispielsweise können die Zusammensetzungen so gewählt werden, dass beim Verwenden von Ferrosilicium ein Teil des Siliciums mit dem Eisenoxid in einer sekundären Reaktion reagiert.

Durch die Verwendung von Bor als sekundäres Reduktionsmittel kann die Anzündempfindlichkeit des Verzögerungssatzes erheblich verbessert werden. Bei den sehr langsam brennenden Mischungen kann durch die Verwendung von Bor außerdem das sichere Weiterbrennen im Verzögerungselement bei extremer Kälte sichergestellt werden.

In Bezug auf die gerüstbildenden Zuschlagstoffe hat sich gezeigt, dass Alumosilicate, besonders das natürlich vorkommende Kaolinit, beim Abbrand des definierten Verzögerungssatzes ein Gerüst ausbildet, das die geschmolzenen, überwiegend kugelförmigen Metallpartikel einlagern und festhalten kann, bevor die gesamte Masse zu einer festen Schlacke erstarrt.

Da sich das gebildete metallische Eisen bzw. die Eisenlegierungen nur schwer mit den Alumosilicaten physikalisch verbinden, können dem Verzögerungssatz zusätzlich Silicatgläser in Form von Glasmehl als gerüstbildenden Zuschlagstoff zugegeben werden. Das Glasmehl verhält sich wie eine Art "Schmelzklebstoff". In der heißen Reaktionszone des brennenden Verzögerungssatzes schmelzen die Silicatgläser auf, zerfließen und verkleben beim Erstarren die Reaktionsprodukte und Zuschlagstoffe zu einer einheitlich kompakten Masse. Die derart gebildete Schlacke weißt eine poröse Struktur auf, ist sehr hart und ihr Volumen entspricht mindestens dem des abgebrannten Verzögerungssatzes.

Da Verzögerungssätze üblicherweise als Granulat verarbeitet werden, enthalten diese in den meisten Fällen ein Bindemittel auf organischer Basis. Bei Abbrand dieser Verzögerungssätze bilden sich gasförmige Reaktionsprodukte, die im erfindungsgemäßen Verzögerungssatz nicht erwünscht sind.

Im erfindungsgemäßen Verzögerungssatz wird deshalb ein mineralischer Binder verwendet, der diese Nachteile nicht aufweist und das Verschlacken des brennenden Satzes zusätzlich fördert.

Es hat sich gezeigt, dass sich die erfindungsgemäßen, pulverigen Mischungen sehr gut mit silicatreichen Wasserglaslösungen nach bekannten Verfahren zu Granulaten verarbeiten lassen. Dabei sind sowohl die chemische Verwandtschaft der in Wasser gelösten Alkalisilicate zu den gerüstbildenden Zuschlagstoffen, Alumosilicate und Silicatgläser, als auch die chemische Stabilität sämtlicher Satzbestandteile gegenüber alkalischen Medien, von Vorteil. Bei der chemischen Trocknung von Wasserglaslösungen durch Aufnahme von Kohlendioxid bilden sich die entsprechenden Alkalicarbonate und Kieselsäure, welche zu amorphen Polykieselsäuren (Kieselgel) kondensiert. Die silicatreichen Wasserglaslösungen stellen so einen "mineralischen Leim" dar, welcher die Satzbestandteile, insbesondere die Alumosilicate und Silicatgläser verkittet.

In der Praxis werden verschiedene Wassergläser auf Natrium-, Kalium- und Lithium-Basis verwendet. Da Natrium- und Kaliumwasserglaslösungen bei der chemischen Trocknung hygroskopisches Natrium- bzw. Kaliumcarbonat bilden und hygroskopische Substanzen in pyrotechnischen Sätzen unerwünscht sind, wird im erfindungsgemäß definierten Verzögerungssatz vorzugsweiße Lithiumwasserglaslösung als Bindemittel verwendet. Das bei der chemischen Trocknung hier gebildete Lithiumcarbonat ist im Unterschied nicht hygroskopisch.

Es gibt eine Reihe bekannter Verzögerungssätze, z.B. auf der Basis von Blei(II,IV)-oxid / Silicium oder Bariumchromat / Zirconium, die in Abhängigkeit der prozentualen Zusammensetzung unterschiedliche Brennzeiten aufweisen. Bei diesen Mischungen, mit unterschiedlicher prozentualer Zusammensetzung, besteht jedoch das Problem, dass sie äußerlich visuell nur schwer voneinander zu unterscheiden sind.

Bei der Herstellung von Verzögerungseinheiten aus mehreren Verzögerungssätzen gleicher Basis mit unterschiedlichen Zusammensetzungen besteht daher immer das Problem, dass sie verwechselt oder versehentlich vermischt werden können. Es sind aufwendige Kontrolleinrichtungen bzw. Prüfmaßnahmen erforderlich, um die Qualität der Verzögerungseinheiten sicherzustellen.

Der erfindungsgemäße Verzögerungssatz weißt diesen Nachteil nicht auf, da vorgesehen ist, dass das primäre Oxidationsmittel aus unterschiedlichen Eisenoxiden bestehen kann, die auch als Eisenoxidpigmente bekannt sind. Aufgrund ihrer charakteristischen Eigenfärbung, ergeben sich auch für den Verzögerungssatz in Abhängigkeit der Zusammensetzung und Brennzeit, charakteristische Färbungen. Anhand dieser Färbungen kann die Brennzeit dem Verzögerungssatz unverwechselbar zugeordnet werden.

Die Verzögerungszeit und die beim Abbrand gebildete Gasmenge des erfindungsgemäßen Verzögerungssatzes sind auch vom Wasserstoffgehalt des Zirconiums abhängig, so dass sich diese Eigenschaften auch durch Verwenden von Zirconium oder Zirconiumhydriden mit unterschiedlichen Wasserstoffgehalten variieren lassen.

Es ist bekannt, dass Zirconium und Zirconiumhydride in Abhängigkeit der partikulären Eigenschaften und dem Wasserstoffgehalt unterschiedliche mechanische, thermische und elektrostatische Empfindlichkeiten aufweisen. Im erfindungsgemäßen Verzögerungssatz können diese Abhängigkeiten genutzt werden, um die Verarbeitungs- und Handhabungssicherheit zu verbessern.

Wie eingangs beschrieben, kann es in Abhängigkeit von der Satzzusammensetzung und der Anzündart erforderlich sein, auf den in der Verzögerungseinheit verpressten Verzögerungssatz zusätzlich einen Anzündsatz zu pressen.

Die vorliegende Erfindung betrifft deshalb ebenfalls einen Anzündsatz, welcher die gleichen gerüstbildenden Zuschlagstoffe und den gleichen mineralischen Binder wie der erfindungsgemäße Verzögerungssatz enthält.

Als Oxidationsmittel werden wie bei dem erfindungsgemäßen Verzögerungssatz Eisenoxide mit unterschiedlichen Oxidationsstufen des Eisens eingesetzt.

Als Reduktionsmittel wird Bor verwendet, welches ebenfalls im erfindungsgemäßen Verzögerungssatz als sekundäres Reduktionsmittel enthalten sein kann.

Der annähernd gleiche chemische Aufbau des erfindungsgemäßen Verzögerungs- und Anzündsatzes, dessen Unterschied sich in der prozentuale Zusammensetzung und qualitativ in den schlackebildenden Zuschlagstoffen, welche im Anzündsatz fehlen, definiert, bietet verschiedene Vorteile:
So ist die chemische Verträglichkeit der Sätze gegeben.

Bedingt durch den gleichen gerüstbildenden Aufbau und den gleichen mineralischen Binder sind die mechanischen Eigenschaften der Sätze sehr ähnlich. Das ist insbesondere dann von Vorteil, wenn die Sätze in einer Verzögerungseinheit in Kombination verpresst werden. Es wird so ein optimaler Übergang zwischen den Sätzen gewährleistet, welcher, bedingt durch die gleichen Wärmeausdehnungskoeffizienten, auch bei Temperaturwechseln gewahrt bleibt.

Durch die leichte Anzündbarkeit von Mischungen aus Eisenoxiden und Bor kann die Anzündung der Verzögerungseinheit in Abhängigkeit des munitionsseitig gegeben Anzündimpulses angepasst werden, ohne dass hiervon die Verzögerungszeit, welche über den Verzögerungssatz definiert wird, betroffen ist.

Durch die gerüstbildenden Zuschlagstoffe wird die beim Abbrand gebildete Schlacke nicht fortgeschleudert, sondern verbleibt im direkten Kontakt zu dem Verzögerungssatz. Zusammen mit den ähnlichen mechanischen Eigenschaften beider Sätze wird so eine optimale Überzündung gewährleistet.

Es sei ausdrücklich darauf hingewiesen, dass der erfindungsgemäße Anzündsatz auch unabhängig von dem beschriebenen Verzögerungssatz als Anzündsatz in einer Vielzahl unterschiedlicher pyrotechnischer Gegenstände / Munitionsarten zur Anwendung kommen kann.

Nachfolgend sind beispielhafte Zusammensetzungen für den erfindungsgemäßen Verzögerungssatz (s. Tabelle 1) und für den erfindungsgemäßen Anzündsatz (s. Tabelle 2) aufgeführt.

**Tabelle 1: Erfindungsgemäßer Verzögerungssatz**

| **Funktion im Verzögerungssatz** | **Zusammensetzung** | |
|---|---|---|
| | **chemikalie** | **Massen%** |
| Oxidationsmittel, primär | Eisen(III)-oxid | 50 ± 20 |
| | Eisen(II,III)-oxid | 55 ± 20 |
| Reduktionsmittel, primär | Zirconium | 30 ± 20 |
| | Zirconiumhydrid | 30 ± 20 |
| Reduktionsmittel,sekundär und/oder schlackebildende Zuschlagstoffe | Ferrosilicium | 0 - 40 |
| | Ferrozirconium | 0 - 40 |
| | Bor | 0 - 5 |
| schlackebildende Zuschlagstoffe | Ferrowolfram | 0 - 30 |
| | Wolfram | 0 - 30 |
| gerüstbildende Zuschlagstoffe | Alumosilicate | 6 ± 5,5 |
| | Silicatgläser | 5 ± 4,5 |
| Bindemittel | Lithiumwasserglaslösung | 0,20 ± 0,15*) |

| | | |
|---|---|---|
| (*) Anteil festes Lithiumwasserglas bezogen auf die Satzmasse) | | |

**Tabelle 2: Erfindungsgemäßer Anzündsatz**

| **Funktion im Anzündsatz** | **Zusammensetzung** | |
|---|---|---|
| | **Chemikalie** | **Massen%** |
| Oxidationsmittel | Eisen(III)-oxid | 70 ± 20 |
| | Eisen(II,III)-oxid | 70 ± 20 |
| Reduktionsmittel | Bor | 15 ± 10 |
| gerüstbildende Zuschlagstoffe | Alumosilicate | 6 ± 5,5 |
| | Silicatgläser | 5 ± 4,5 |
| Bindemittel | Lithiumwasserglaslösung | 0,20 ± 0,15 *) |

| | | |
|---|---|---|
| (*) Anteil festes Lithiumwasserglas bezogen auf die Satzmasse) | | |

## Patentansprüche

1. Pyrotechnischer Anzünd- oder Verzögerungssatz aus human- und ökotoxikologisch unbedenklichen, REACh (Registration, Evaluation, Authorisation and Restriction of Chemicals) konformen Inhaltsstoffen,
**dadurch gekennzeichnet,**
**dass** der Anzünd- oder Verzögerungssatz mindestens ein Oxidationsmittel umfasst, dass der Anzünd- oder Verzögerungssatz mindestens ein Reduktionsmittel umfasst, dass der Anzünd- oder Verzögerungssatz mindestens einen Zuschlagstoff umfasst, welcher schlacke- oder gerüstbildend ist
und **dass** der Anzünd- oder Verzögerungssatz mindestens einen mineralischen Binder umfasst.

2. Pyrotechnischer Anzünd- oder Verzögerungssatz nach Anspruch 1, **dadurch gekennzeichnet, dass** das Oxidationsmittel Eisenoxide umfasst, insbesondere Eisen(III)-oxid (Fe₂O₃) und/oder Eisen(II,III)-oxid (Fe₃O₄ bzw. FeO·Fe₂O₃).

3. Pyrotechnischer Anzünd- oder Verzögerungssatz nach Ansprüche 1 oder 2, **dadurch gekennzeichnet, dass** der Zuschlagstoff Alumosilicate und/oder Silicatgläser umfasst.

4. Pyrotechnischer Anzünd- oder Verzögerungssatz nach einem der Ansprüche 1 bis 3, **dadurch gekennzeichnet, dass** der mineralische Binder amorphe Polykieselsäuren umfasst.

5. Pyrotechnischer Anzünd- oder Verzögerungssatz nach einem der Ansprüche 1 bis 4, **dadurch gekennzeichnet, dass** der Verzögerungssatz unter Zuhilfenahme von Wasserglaslösungen zu Granulat verarbeitbar ist, insbesondere durch Lithiumwasserglaslösungen.

6. Pyrotechnischer Verzögerungssatz nach einem der Ansprüche 1 bis 5, **dadurch gekennzeichnet, dass** das Reduktionsmittel Zirconium oder Zirconiumhydrid umfasst.

7. Pyrotechnischer Verzögerungssatz nach einem der Ansprüche 1 bis 6, **dadurch gekennzeichnet, dass** unterschiedliche Wasserstoffgehalte des Zirconiums oder Zirconiumhydrids für unterschiedliche Verzögerungszeiten vorgesehen sind.

8. Pyrotechnischer Verzögerungssatz nach einem der Ansprüche 1 bis 7, **dadurch gekennzeichnet, dass** als zusätzliches Reduktionsmittel Ferrosilicium und/oder Ferrozirconium und/oder Bor verwendet wird.

9. Pyrotechnischer Verzögerungssatz nach einem der Ansprüche 1 bis 8, **dadurch gekennzeichnet, dass** der Zuschlagstoff verschiedene Eisenlegierungen oder Wolfram umfasst.

10. Pyrotechnischer Verzögerungssatz nach einem der Ansprüche 1 bis 9, **dadurch gekennzeichnet, dass** der Verzögerungssatz ein Rohr als Hülse umfasst, dass die Zusammensetzung des Verzögerungssatzes, sowie die Korngrößenverteilung der Satzbestandteile eine Brennzeit von 0,2 s/cm bis zu 4 s/cm ermöglichen und dass der Verzögerungssatz in einem Rohr verdichtet ist.

11. Pyrotechnischer Verzögerungssatz nach Anspruch 10, **dadurch gekennzeichnet dass** der verdichtete Verzögerungssatz im Rohr aus einer oder verschiedenen Mischung/en besteht und an einem Ende einen Anzündsatz aufweist.

12. Pyrotechnischer Verzögerungssatz nach Anspruch 10 oder 11, **dadurch gekennzeichnet, dass** das Rohr aus Metall oder Keramik besteht.

13. Pyrotechnischer Verzögerungssatz nach Anspruch 10 oder 11, **dadurch gekennzeichnet, dass** das Rohr aus einem brennbaren Material besteht.

14. Pyrotechnischer Verzögerungssatz nach einem der Ansprüche 1 bis 13, **dadurch gekennzeichnet, dass** das Oxidationsmittel farbige Eisenoxidpigmente umfasst.

15. Pyrotechnischer Anzündsatz nach einem der Ansprüche 1 bis 5, **dadurch gekennzeichnet, dass** das Reduktionsmittel Bor umfasst.

16. Pyrotechnischer Anzündsatz nach Anspruch 15, **dadurch gekennzeichnet, dass** der Anzündsatz zum Anzünden eines pyrotechnischen Verzögerungssatzes nach den Ansprüchen 1 bis 12, oder für andere pyrotechnische Sätze verwendet werden kann.

## Claims

1. Pyrotechnic primer charge or delay composition composed of REACh (Registration, Evaluation, Authorisation and Restriction of Chemicals)-compliant constituents which are toxicologically unproblematical for human beings and the environment,
**characterized**
**in that** the primer charge or delay composition comprises at least one oxidizing agent,
**in that** the primer charge or delay composition comprises at least one reducing agent,
**in that** the primer charge or delay composition comprises at least one additive which is slag- or framework-forming and in that the primer charge or delay composition comprises at least one mineral binder.

2. Pyrotechnic primer charge or delay composition according to Claim 1, **characterized in that** the oxidizing agent comprises iron oxides, in particular iron(III) oxide (Fe₂O₃) and/or iron(II,III) oxide (Fe₃O₄ or FeO·Fe₂O₃).

3. Pyrotechnic primer charge or delay composition according to Claim 1 or 2, **characterized in that** the additive comprises aluminosilicates and/or silicate glasses.

4. Pyrotechnic primer charge or delay composition according to any of Claims 1 to 3, **characterized in that** the mineral binder comprises amorphous polysilicic acids.

5. Pyrotechnic primer charge or delay composition according to any of Claims 1 to 4, **characterized in that** the delay composition can be processed with the aid of water glass solutions to give granular material, in particular by means of lithium water glass solutions.

6. Pyrotechnic delay composition according to any of Claims 1 to 5, **characterized in that** the reducing agent comprises zirconium or zirconium hydride.

7. Pyrotechnic delay composition according to any of Claims 1 to 6, **characterized in that** different hydrogen contents of the zirconium or zirconium hydride are provided for different delay times.

8. Pyrotechnic delay composition according to any of Claims 1 to 7, **characterized in that** ferrosilicon and/or ferrozirconium and/or boron is/are used as additional reducing agent.

9. Pyrotechnic delay composition according to any of Claims 1 to 8, **characterized in that** the additive comprises various iron alloys or tungsten.

10. Pyrotechnic delay composition according to any of Claims 1 to 9, **characterized in that** the delay composition comprises a tube as sheath, **in that** the chemical make-up of the delay composition and also the particle size distribution of the constituents of the composition make a burning time of from 0.2 s/cm to 4 s/cm possible and **in that** the delay composition is compacted in a tube.

11. Pyrotechnic delay composition according to Claim 10, **characterized in that** the compacted delay composition in the tube consists of one or more mixture(s) and has a primer charge at one end.

12. Pyrotechnic delay composition according to Claim 10 or 11, **characterized in that** the tube consists of metal or ceramic.

13. Pyrotechnic delay composition according to Claim 10 or 11, **characterized in that** the tube consists of a combustible material.

14. Pyrotechnic delay composition according to any of Claims 1 to 13, **characterized in that** the oxidizing agent comprises colored iron oxide pigments.

15. Pyrotechnic primer charge according to any of Claims 1 to 5, **characterized in that** the reducing agent comprises boron.

16. Pyrotechnic primer charge according to Claim 15, **characterized in that** the primer charge can be used for igniting a pyrotechnic delay composition according to Claims 1 to 12 or for other pyrotechnic charges.

## Revendications

1. Ensemble d'allumage ou de retardement pyrotechnique composé d'ingrédients sans danger pour l'homme et sur le plan écotoxicologique, conformes à REACh (Registration, Evaluation, Authorisation and Restriction of Chemicals), **caractérisé en ce que** l'ensemble d'allumage ou de retardement comprend au moins un agent d'oxydation, **en ce que** l'ensemble d'allumage ou de retardement comprend au moins un agent de réduction, l'ensemble d'allumage ou de retardement comprend au moins un adjuvant qui forme des scories ou un squelette et **en ce que** l'ensemble d'allumage ou de retardement comprend au moins un liant minéral.

2. Ensemble d'allumage ou de retardement pyrotechnique selon la revendication 1, **caractérisé en ce que** l'agent d'oxydation comprend des oxydes de fer, en particulier de l'oxyde de fer(III) (Fe₂O₃) et/ou de l'oxyde de fer (II,III) (Fe₃O₄ ou FeO·Fe₂O₃).

3. Ensemble d'allumage ou de retardement pyrotechnique selon la revendication 1 ou 2, **caractérisé en ce que** l'adjuvant comprend des aluminosilicates et/ou des verres de silicate.

4. Ensemble d'allumage ou de retardement pyrotechnique selon l'une quelconque des revendications 1 à 3, **caractérisé en ce que** le liant minéral comprend des acides polysiliciques amorphes.

5. Ensemble d'allumage ou de retardement pyrotechnique selon l'une quelconque des revendications 1 à 4, **caractérisé en ce que** l'ensemble de retardement peut être transformé en granulé à l'aide de solutions de verre d'eau, en particulier de solutions de verre d'eau au lithium.

6. Ensemble de retardement pyrotechnique selon l'une quelconque des revendications 1 à 5, **caractérisé en ce que** l'agent de réduction comprend du zirconium ou de l'hydrure de zirconium.

7. Ensemble de retardement pyrotechnique selon l'une quelconque des revendications 1 à 6, **caractérisé en ce que** différentes teneurs en hydrogène du zirconium ou de l'hydrure de zirconium sont prévues pour des temps de retardement différents.

8. Ensemble de retardement pyrotechnique selon l'une quelconque des revendications 1 à 7, **caractérisé en ce qu'**en tant qu'agent de réduction supplémentaire du ferrosilicium et/ou du ferrozirconium et/ou du bore sont utilisés.

9. Ensemble de retardement pyrotechnique selon l'une quelconque des revendications 1 à 8 **caractérisé en ce que** l'adjuvant comprend différents alliages de fer ou du tungstène.

10. Ensemble de retardement pyrotechnique selon l'une quelconque des revendications 1 à 9, caractérisé en ce l'ensemble de retardement comprend un tuyau en tant qu'enveloppe, en ce que la composition de l'ensemble de retardement ainsi que la granulométrie des ingrédients de l'ensemble rendent possible un temps de combustion de 0,2 s/cm jusqu'à 4 s/cm et en ce que l'ensemble de retardement est densifié dans un tuyau.

11. Ensemble de retardement pyrotechnique selon la revendication 10, **caractérisé en ce que** l'ensemble de retardement densifié dans le tuyau est composé d'un ou de différents mélange(s) et présente un ensemble d'allumage à une extrémité.

12. Ensemble de retardement pyrotechnique selon la revendication 10 ou 11, **caractérisé en ce que** le tuyau est constitué de métal ou de céramique.

13. Ensemble de retardement pyrotechnique selon la revendication 10 ou 11, **caractérisé en ce que** le tuyau est constitué d'un matériau combustible.

14. Ensemble de retardement pyrotechnique selon l'une quelconque des revendications 1 à 13, **caractérisé en ce que** l'agent d'oxydation comprend des pigments colorés d'oxyde de fer.

15. Ensemble d'allumage pyrotechnique selon l'une quelconque des revendications 1 à 5, **caractérisé en ce que** l'agent de réduction comprend du bore.

16. Ensemble d'allumage pyrotechnique selon la revendication 15, **caractérisé en ce que** l'ensemble d'allumage peut être utilisé pour l'allumage d'un ensemble de retardement pyrotechnique selon les revendications 1 à 12, ou pour d'autres ensembles pyrotechniques.
